(19) Europäisches Patentamt
European Patent Office
Office européen des brevets

(11) **EP 3 649 707 B1**

(12) **FASCICULE DE BREVET EUROPEEN**

(45) Date de publication et mention
de la délivrance du brevet:
**20.04.2022 Bulletin 2022/16**

(21) Numéro de dépôt: **18733299.4**

(22) Date de dépôt: **29.06.2018**

(51) Classification Internationale des Brevets (IPC):
***H01S 3/067*** (2006.01)          ***G02B 6/02*** (2006.01)

(52) Classification Coopérative des Brevets (CPC):
**H01S 3/06737;** G02B 6/02338

(86) Numéro de dépôt international:
**PCT/EP2018/067543**

(87) Numéro de publication internationale:
**WO 2019/007826 (10.01.2019 Gazette 2019/02)**

(54) **FIBRE AMPLIFICATRICE LÉGÈREMENT MULTIMODE**

MÄSSIG MULTIMODAL VERSTÄRKENDE FASER

MODERATELY MULTIMODAL AMPLIFYING FIBRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.07.2017 FR 1756238**

(43) Date de publication de la demande:
**13.05.2020 Bulletin 2020/20**

(73) Titulaires:
• **Centre National de la Recherche Scientifique
75016 Paris (FR)**
• **Université de Lille
59655 Villeneuve-d'Ascq (FR)**

(72) Inventeurs:
• **TRINEL, Jean-Baptiste
62218 Loison sous Lens (FR)**
• **LE COCQ, Guillaume
59130 Lambersart (FR)**
• **BIGOT, Laurent
59260 Hellemmes - Lille (FR)**
• **BOUWMANS, Géraud
59830 Cysoing (FR)**

(74) Mandataire: **Marks & Clerk France
Immeuble "Visium"
22, avenue Aristide Briand
94117 Arcueil Cedex (FR)**

(56) Documents cités:
EP-A2- 2 852 011          GB-A- 2 310 506
US-A1- 2011 141 555      US-A1- 2014 168 756
US-A1- 2016 020 573      US-B1- 9 250 385

**Description**

**Domaine technique de l'invention**

La présente invention concerne une fibre amplificatrice légèrement multimode, une méthode pour fabriquer une telle fibre amplificatrice légèrement multimode et un module d'amplification comprenant une telle fibre amplificatrice légèrement multimode.

**Etat de l'art**

Les performances en termes de débit d'information dans les réseaux de fibres optiques monomodes n'ont cessé d'augmenter au cours des trente dernières années, notamment pour les applications de télécommunications optiques longue distance. Cependant, la croissance exponentielle du trafic des données observée aujourd'hui risque d'épuiser la capacité disponible de transport des données via les fibres monomodes. En effet, lorsqu'on dépasse des puissances optiques seuils dans les fibres monomodes, des effets non-linéaires perturbent la forme des signaux et empêchent la montée en débit.

Les fibres multi-cœurs et/ou légèrement multimode permettent, par le recours au multiplexage spatial de l'information, d'accroître la capacité de transport d'une fibre optique unique d'un facteur donné. Plus précisément, une fibre multi-cœur ou « MCF » selon l'abréviation de l'expression anglo-saxonne « Multicore Fiber » comprend une pluralité de cœurs monomodes au sein d'une même gaine. Chaque cœur peut donc être utilisé comme un canal indépendant pour transmettre l'information ; la capacité de transmission d'une fibre MCF est ainsi proportionnelle au nombre de cœurs que contient la fibre. Une fibre légèrement multimode ou « FMF » selon l'abréviation de l'expression anglo-saxonne « Few Mode Fiber », est une fibre multimode présentant un nombre limité de modes spatiaux de propagation, typiquement entre 2 et 100 modes spatiaux ; une telle fibre légèrement multimode peut permettre d'utiliser les différents modes spatiaux comme autant de canaux pour transporter l'information. Des différences d'indices effectifs suffisantes entre les modes limitent le couplage entre les modes (autrement appelé « diaphonie » ou « crosstalk »), ce qui permet d'utiliser les groupes de modes comme autant de canaux indépendants de transmission dans un même cœur de fibre. Il est également possible de combiner les deux approches, en utilisant une fibre multi-cœur dont chaque cœur peut guider un nombre limité de modes de propagation comme le font les FMFs.

Pour le transport de signaux optiques sur de longues distances, les signaux optiques sont ré-amplifiés, après une distance donnée de propagation, typiquement une centaine de kms. Pour ce faire, il est connu d'utiliser des amplificateurs à fibre, par exemple des amplificateurs à fibre dopée erbium. Ainsi, sur un réseau comprenant N fibres de transport monomodes, on utilisera autant d'amplificateurs à fibre.

Le développement d'amplificateurs à fibre légèrement multimode est sujet à d'intenses recherches depuis quelques années, notamment dans le domaine des télécommunications optiques, que ce soit en vue de l'amplification de signaux optiques provenant d'une fibre de transmission légèrement multimode ou bien en vue de l'amplification par un composant amplificateur unique de signaux optiques provenant d'un ensemble de fibres monomodes. Pour atteindre le niveau de performances souhaité, des travaux sur la fibre amplificatrice et son utilisation (modes de pompe utilisés, notamment) sont en cours. Une des pistes consiste à doper uniformément le cœur d'une fibre légèrement multimode. Cependant, dans ce cas, il est très probable d'obtenir une disparité non contrôlée entre les gains des différents modes, et à fortiori une disparité des gains aux différentes longueurs d'onde utilisées pour la transmission des signaux optiques.

De ce fait, des travaux ont été menés visant à l'amplification simultanée et de façon sensiblement identique de l'ensemble des modes de la fibre légèrement multimode sur l'ensemble de la fenêtre Telecom (bande C, notamment).

L'article ″Latest results and future perspectives on Few-Mode Erbium Doped Fiber Amplifiers″, J-B. Trinel, G. Le Cocq, E. Andresen, Y. Quiquempois, et L. Bigot, Optical Fiber Technology, 35 56-63 (2017) décrit l'état de l'art de ces travaux ainsi que les méthodes mises en œuvre pour aboutir à un équilibrage des gains. Notamment, est décrite l'approche visant à optimiser la distribution transverse de la concentration en dopant erbium pour favoriser l'égalisation du gain de quatre modes spatiaux d'ordre supérieur.

Une des méthodes présentées dans cet article consiste à déposer, sur la paroi interne d'un tube de dépôt, des couches de verre par déposition chimique en phase vapeur modifiée (MCVD). Cette méthode permet d'obtenir une FMF avec une concentration en Erbium qui varie radialement. Cependant, le contrôle précis de concentration d'Erbium par cette méthode est difficile et limité ; par ailleurs, la reproductibilité des fibres n'est pas toujours assurée.

Une autre méthode décrite dans cet article consiste à assembler dans un cœur de fibre des préformes ayant des concentrations uniformes d'Erbium avec des préformes sans Erbium, puis d'étirer l'ensemble pour obtenir une fibre. Par rapport à la méthode précédemment décrite, cette méthode présente l'avantage d'offrir un meilleur contrôle de la répartition spatiale d'Erbium.

D'autres documents, à l'instar de US 2014/168756 A1, décrivent des fibres amplificatrices multicœurs, chaque cœur étant monomode, qui se différencient de la fibre amplificatrice de l'invention en ce que dans D1 l'information se propage dans chacun des cœurs.

La présente description propose une fibre amplificatrice légèrement multimode, qui peut être obtenue avec une méthode de fabrication maîtrisée et reproductible et qui permet un contrôle encore plus précis du gain pour chaque mode guidé de la fibre amplificatrice.

RESUME

Selon un premier aspect, la présente description concerne une fibre amplificatrice légèrement multimode dans une bande spectrale d'utilisation donnée, comprenant une gaine présentant un indice de réfraction donné et au moins un cœur d'indice de réfraction et de dimensions adaptées pour la propagation d'un nombre fini de modes spatiaux dans la bande spectrale d'utilisation de la fibre, un mode spatial de propagation correspondant à un canal de transport de l'information.

Ledit cœur comprend un premier matériau solide présentant un premier indice de réfraction donné strictement supérieur à l'indice de réfraction de la gaine, et, au sein dudit premier matériau, des inclusions séparées spatialement les unes des autres, formées de barreaux longitudinaux comprenant chacun au moins un deuxième matériau solide présentant un deuxième indice de réfraction strictement supérieur au premier indice de réfraction, au moins une desdites inclusions étant dopée activement.

La propagation du nombre fini de modes spatiaux dans le coeur ne résout pas la structure fine des différents matériaux composant le coeur et les modes spatiaux ne sont pas confinés dans l'une ou l'autre des inclusions et peu perturbés par les inclusions.

Par « mode de propagation », ou « mode guidé », on entend dans la présente description une solution des équations de Maxwell de la propagation d'un champ électromagnétique dans la fibre optique. Un mode guidé est caractérisé par une répartition spatiale transverse de l'intensité du champ électromagnétique dans la fibre, une orientation des champs électriques/magnétiques (ou polarisation) et une constante de propagation (proportionnelle à l'indice effectif du mode).

Dans la suite de la description, on parlera aussi de « mode spatial », caractérisé par la répartition spatiale transverse de l'intensité du champ électromagnétique dans la fibre optique et de « groupe de modes spatiaux» qui sont des modes spatiaux présentant une même constante de propagation.

Une telle fibre amplificatrice présente l'avantage de permettre un meilleur contrôle des gains des modes spatiaux guidés par la fibre et donc de l'amplification des signaux optiques amenés à se propager dans ladite fibre selon chacun des modes de propagation, tout en gardant le caractère légèrement multimode de la fibre. En effet, la structure originale dite « en piédestal » du cœur, obtenue grâce à un indice de réfraction des inclusions strictement supérieur à l'indice du matériau en périphérie des inclusions, luimême strictement supérieur à l'indice de la gaine, permet un contrôle des profils transverses d'intensité des modes spatiaux guidés ainsi qu'un contrôle fin des gains grâce à l'application sélective de dopage au sein des inclusions.

Selon un ou plusieurs exemples de réalisation, un paramètre de fréquence normalisé de chaque inclusion,

défini par $V_2 = \frac{\pi d_2}{\lambda}\sqrt{n_2^2 - n_1^2}$ , où $n_1$ est ledit premier indice de réfraction, $n_2$ est ledit deuxième indice de réfraction, $d_2$ est une dimension maximale de ladite inclusion, est strictement inférieur à 1, préférentiellement strictement inférieur à 0.8.

Avec un paramètre de fréquence normalisée de chaque inclusion suffisamment faible, on garantit qu'un champ transverse d'une onde optique se propageant dans la fibre amplificatrice légèrement multimode soit confiné dans ledit premier cœur mais pas au sein d'une inclusion. Ainsi, les inclusions ne guident pas de manière individuelle la lumière.

Selon un ou plusieurs exemples de réalisation, la différence entre le deuxième indice de réfraction et le premier indice de réfraction est supérieure ou égale à $10^{-3}$.

Selon un ou plusieurs exemples de réalisation, une dimension maximale de chaque inclusion est de l'ordre de grandeur de la longueur d'onde minimale de ladite bande spectrale d'utilisation, c'est-à-dire inférieure ou égale à dix fois la longueur d'onde minimale de ladite bande spectrale d'utilisation. Avec des inclusions de dimensions de l'ordre de grandeur de la longueur d'onde des signaux lumineux destinés à se propager dans la fibre, une onde lumineuse ne sera pas confinée dans les inclusions mais « verra » un indice de réfraction moyen du cœur.

Selon un ou plusieurs exemples de réalisation, les inclusions sont réparties symétriquement par rapport à un axe central de la fibre amplificatrice. L'agencement symétrique des inclusions permet notamment de s'adapter à la symétrie de rotation des modes guidés tels qu'on les connaît dans les fibres optiques conventionnelles à cœur circulaire avec lesquelles on souhaite généralement être compatible.

A contrario, un agencement non symétrique par rapport à un axe central de la fibre amplificatrice permet d'obtenir des répartitions d'intensité moins conventionnelles mais potentiellement intéressantes pour, par exemple, obtenir des répartitions d'intensités non-circulaires.

Selon un ou plusieurs exemples de réalisation, au moins une des dites inclusions est dopée avec des ions de terre-rare tels que par exemple des ions Erbium ($Er^{3+}$), Ytterbium ($Yb^{+}$), Thulium ($Tm^{3+}$). Selon les cas, toutes les inclusions peuvent être dopées ou non, avec les mêmes concentrations ou non sans que les propriétés de guidage soient altérées. Le but est de pouvoir mettre en forme très précisément la distribution transverse en ions dopant dans le cœur en la discrétisant.

Selon un deuxième aspect, la présente description concerne une méthode de fabrication d'une fibre amplificatrice légèrement multimode selon l'une des revendications précédentes, comprenant :

- l'assemblage de barreaux longitudinaux périphériques millimétriques destinés à former au moins une partie de la gaine de la fibre amplificatrice autour de barreaux longitudinaux centraux millimétriques destinés à former le cœur de la fibre amplificatrice, lesdits barreaux longitudinaux centraux comprenant :

  - une portion longitudinale centrale comprenant ledit deuxième matériau et
  - une portion longitudinale périphérique entourant ladite portion longitudinale centrale et comprenant ledit premier matériau, la portion longitudinale centrale d'au moins un des barreaux longitudinaux centraux étant dopée activement ;

- l'étirage de l'assemblage ainsi formé desdits barreaux longitudinaux centraux millimétriques et desdits barreaux longitudinaux périphériques millimétriques pour former la fibre amplificatrice.

Une telle méthode de fabrication d'une fibre amplificatrice présente l'avantage d'être maîtrisée techniquement et reproductible. La réalisation d'un cœur micro-structuré obtenu par assemblage permet de parfaitement contrôler la géométrie générale du cœur. Notamment, grâce au dopage sélectif des inclusions, la méthode ainsi décrite permet de contrôler la répartition spatiale des dopants ; il est alors possible de réaliser avec précision les profils d'indice complexes générés par la présence de dopants et d'offrir une très bonne prédictibilité sur les performances attendues par la fibre amplificatrice.

Selon un ou plusieurs exemples de réalisation, la méthode de fabrication d'une fibre amplificatrice comprend une étape préalable de fabrication desdits barreaux longitudinaux centraux millimétriques, ladite étape préalable comprenant :

- la réalisation de préformes, par exemple par la méthode MCVD, les préformes comprenant une coque de silice, lesdits premier et deuxième matériaux ;
- l'usinage des préformes pour éliminer partiellement ou totalement la coque de silice ;
- l'étirage des préformes après usinage pour obtenir lesdits barreaux longitudinaux centraux millimétriques.

La fabrication des barreaux longitudinaux centraux millimétriques ci-dessus décrite permet de façon maitrisée de contrôler le profil d'indice et d'inclure des ions dopants si nécessaire dans le deuxième matériau pour former par la suite les inclusions dopées de la fibre amplificatrice.

Selon un troisième aspect, la présente description concerne un module d'amplification de signaux optiques de longueurs d'onde comprises dans une bande spectrale d'utilisation donnée comprenant :

- une fibre amplificatrice légèrement multimode selon le premier aspect, configurée pour le guidage d'un nombre donné de modes spatiaux dans ladite bande spectrale d'utilisation;
- une source de pompage optique configurée pour l'émission d'un faisceau de pompe permettant d'activer la fibre amplificatrice ;
- un composant de multiplexage en longueur d'onde configuré pour injecter lesdits faisceaux signaux et ledit faisceau de pompe dans la fibre amplificatrice.

Un tel module d'amplification permet d'amplifier simultanément et de manière contrôlée les signaux optiques adaptés à se propager selon les différents modes spatiaux de la fibre amplificatrice, les signaux optiques pouvant avoir des longueurs d'onde d'émission différentes. Ainsi, la fonction d'amplification peut être partagée, par exemple par des réseaux fibrés monomodes, le faible couplage (obtenu par une géométrie appropriée) entre les modes spatiaux et le contrôle du gain optique permettant la propagation et l'amplification des signaux optiques provenant des réseaux fibrés monomodes.

Selon un ou plusieurs exemples de réalisation, le module d'amplification comprend un module de mise en forme spatiale du faisceau de pompe configuré pour contrôler sélectivement l'activation de la fibre amplificatrice en fonction desdits modes spatiaux de propagation.

Selon un ou plusieurs exemples de réalisation, le dopage d'au moins une desdites inclusions de la fibre amplificatrice et la forme spatiale du faisceau de pompe sont configurés pour que les gains des modes spatiaux soient égaux.

Selon un ou plusieurs exemples de réalisation, le dopage d'au moins une desdites inclusions de la fibre amplificatrice et la forme spatiale du faisceau de pompe sont configurés pour que le gain d'un mode spatial de la fibre amplificatrice soit différent de zéro et que les gains des autres modes spatiaux soient nuls.

BREVE DESCRIPTION DES FIGURES

D'autres avantages et caractéristiques de l'invention apparaîtront à la lecture de la description, illustrée par les figures suivantes qui représentent :

- FIG. 1A, un schéma d'un exemple de fibre amplificatrice légèrement multimode selon la présente description et FIG.1B le profil d'indice du cœur de la fibre amplificatrice légèrement multimode représentée sur la FIG.1A ;
- FIG.2 une représentation théorique de différents modes guidés, à une longueur d'onde comprise dans la bande spectrale d'utilisation de la fibre, dans un exemple de fibre amplificatrice légèrement multimode telle qu'illustrée sur la FIG.1A ;
- FIG.3A et 3B, des schémas représentant des étapes de fabrication d'un exemple de fibre amplificatrice légèrement multimode selon la présente description ;
- FIGS. 4A et 4B, des images obtenues respectivement par microscopie optique et microscopie électronique à balayage d'un exemple de fibre amplificatrice légèrement multimode selon la présente description ; FIG.4C un graphique représentant le profil d'indice de réfraction dans une préforme utilisée pour former la fibre telle qu'illustrée sur la FIG.4B ;
- FIGS. 5A - 5C, des répartitions d'intensités observées en sortie d'un exemple de la fibre amplificatrice légèrement multimode et enregistrées à l'aide d'une caméra InGaAs ;
- FIG. 6, un schéma d'un exemple de module d'amplification comprenant une fibre amplificatrice légèrement multimode selon la présente description ;
- FIG. 7, un graphique représentant le gain théorique de différents modes et l'écart de gain des différents modes dans un exemple de fibre amplificatrice légèrement multimode selon la présente description, en fonction de la longueur d'onde ;
- FIG. 8, un diagramme représentant des étapes pour la conception d'un module d'amplification pour l'amplification de N signaux optiques selon la présente description.

DESCRIPTION DETAILLEE

Sur les figures, les éléments ne sont pas représentés à l'échelle pour une meilleure visibilité.

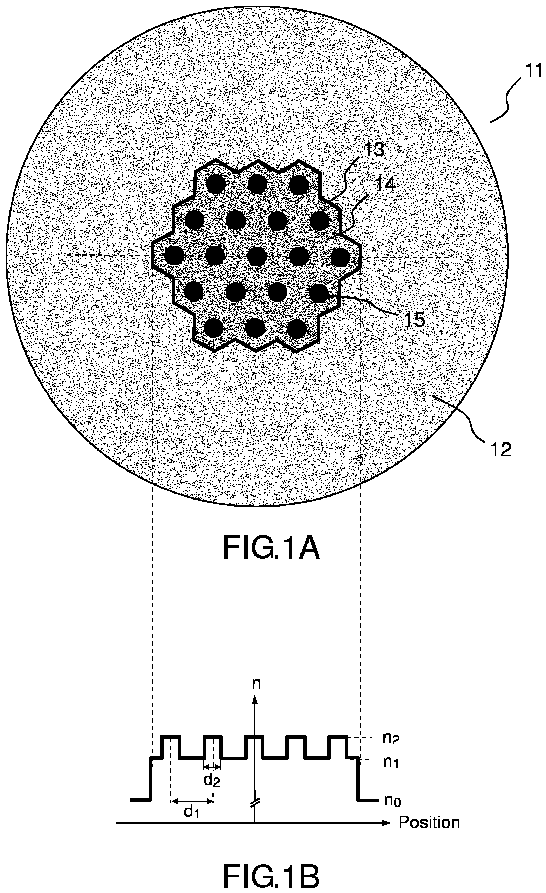

La FIG.1A illustre de façon schématique un exemple de fibre amplificatrice légèrement multimode 11 selon la présente description, adaptée pour fonctionner dans une bande spectrale d'utilisation donnée. La FIG. 1B représente un exemple de profil d'indice du cœur de la fibre 11 illustrée sur la FIG. 1A, selon la ligne en pointillés représentée sur la FIG.1A.

La bande spectrale est par exemple la fenêtre Telecom couvrant la gamme 1530-1565 nm (dite bande C) dans le cas le plus couramment utilisé de l'amplification par des ions Erbium, ou encore la gamme 977-1100 nm dans le cas des ions Ytterbium utilisés par exemple pour des applications laser.

Dans cet exemple, la fibre amplificatrice légèrement multimode 11 comprend une gaine 12 présentant un indice de réfraction $n_0$ donné et un cœur 13 présentant un indice de réfraction équivalent et des dimensions adaptées pour la propagation, dans la bande spectrale d'utilisation de la fibre, d'un nombre fini de modes spatiaux, typiquement entre 2 et 100 modes spatiaux. Le cœur 13 comprend un premier matériau solide 14 présentant un premier indice de réfraction $n_1$ donné strictement supérieur à $n_0$ et, au sein dudit premier matériau, des inclusions 15 séparées spatialement les unes des autres et formées de barreaux longitudinaux comprenant chacun au moins un deuxième matériau solide présentant un deuxième indice de réfraction $n_2$ strictement supérieur à $n_1$.

Selon un exemple de réalisation, les inclusions sont formées de barreaux longitudinaux comprenant le même deuxième matériau solide. Il est également possible pour deux inclusions distinctes d'être formées de barreaux longitudinaux comprenant un des matériaux différents, d'indices de réfraction différents.

Selon la présente description, au moins une desdites inclusions est dopée activement, par exemple au moyen d'ions Erbium ($Er^{3+}$).

De manière générale, on peut définir une dimension maximale $d_2$ de chacune des inclusions 15 mesurée dans un plan de coupe transverse de la fibre amplificatrice 11 (plan de la FIG. 1A), et une dimension $d_1$ entre deux inclusions adjacentes définie par exemple par la distance entre les centres des deux inclusions.

Les paramètres $n_0$, $n_1$, $n_2$, $d_1$ et $d_2$ sont déterminés pour obtenir un nombre donné recherché de modes spatiaux dans la bande spectrale d'utilisation de la fibre.

Plus précisément, pour quantifier le caractère multimode d'une fibre, on peut définir de façon connue une « fréquence normalisée du cœur », notée $V_{coeur}$, et définie par :

$$Vcoeur = \frac{2\pi}{\lambda} \frac{A_{coeur}}{\sqrt{3\pi}} \sqrt{n_{FSM}^2 - n_0^2} \qquad (1)$$

où $A_{coeur}$ est l'aire totale du cœur et $n_{FSM}$ est l'indice équivalent du cœur, tel que, dans l'hypothèse où la longueur d'onde est supérieure à $d_2$ :

$$n_{FSM} = \sqrt{n_1^2 + f(n_2^2 - n_1^2)} \qquad (2)$$

où

$$f = \frac{Aire\_d'une\_inclusion}{Aire\_totale\_d'un\_sous\_élément\_de\_la\_famille} \qquad (3)$$

L'aire totale d'un sous élément de la maille correspond à l'aire autour d'une inclusion ayant un diamètre $d_1$.

Dans le cas de sous-éléments à section hexagonale et d'inclusions à section circulaire :

$$f = \frac{2\pi}{3\sqrt{3}} \left( \frac{d_2\sqrt{3}}{2d_1} \right)^2 \qquad (4)$$

Les paramètres $n_0$, ni, $n_2$, di et $d_2$ sont déterminés pour que $V_{coeur}$ soit suffisamment grand, c'est à dire supérieure strictement à 2.405 afin de permettre la propagation d'une pluralité de modes guidés dans le cœur.

Comme illustré sur la FIG.1B, le profil transverse d'indice de réfraction est un profil d'indices dit « en piédestal » avec $n_2 > n_1 > n_0$. Un tel profil d'indice en piédestal associé à une dimension maximale $d_2$ des inclusions plus petite ou égale que les longueurs d'onde de la bande spectrale d'utilisation, permet de maîtriser l'intensité des modes spatiaux de propagation tout en évitant le confinement du champ électromagnétique au sein des inclusions.

Selon un exemple de réalisation, comme cela est illustré sur les FIGS. 1A et 1B, les inclusions présentent des formes et des dimensions sensiblement identiques, dans cet exemple, les inclusions forment des barreaux sensiblement cylindriques, la dimension $d_2$ correspondant à un diamètre du barreau et la dimension $d_1$ correspondant à la distance entre deux centres desdites inclusions. D'autres formes sont possibles pour les inclusions ; par l'exemple, les inclusions peuvent présenter une section elliptique.

Par ailleurs, comme cela est illustré sur les FIGS. 1A et 1B, l'agencement des inclusions peut être symétrique par rapport à un axe central de rotation de la fibre. Dans ce cas, des répartitions d'intensité pour les modes guidés peuvent être similaires à celles rencontrées dans les fibres optiques conventionnelles à cœur circulaire.

Pour chaque inclusion, on peut par ailleurs définir un paramètre de fréquence normalisée qui permet d'évaluer le confinement du champ transverse d'une onde électromagnétique se propageant au sein de l'inclusion.

On définit la fréquence normalisée d'une inclusion par :

$$V_2 = \frac{\pi d_2}{\lambda} \sqrt{n_2^2 - n_1^2} \qquad (5)$$

Une valeur grande de la fréquence normalisée $V_2$ est caractéristique d'un fort confinement du champ tandis qu'une valeur petite, typiquement plus petite que 1, est caractéristique d'un faible confinement du champ transverse de l'onde électromagnétique dans l'inclusion. Selon un ou plusieurs exemples de réalisation, on choisira les paramètres de la fibre de telle sorte que $V_2 < 1$, avantageusement $V_2 < 0.8$ afin d'empêcher le confinement de la lumière dans une inclusion individuelle.

Par exemple, avec l'action conjointe de la dimension $d_2$ des inclusions (généralement de l'ordre de grandeur ou inférieure ou égale à la longueur d'onde d'utilisation) et du coefficient $\sqrt{n_2^2 - n_1^2}$ permet de limiter la valeur de la fréquence normalisée et donc le confinement dans les inclusions.

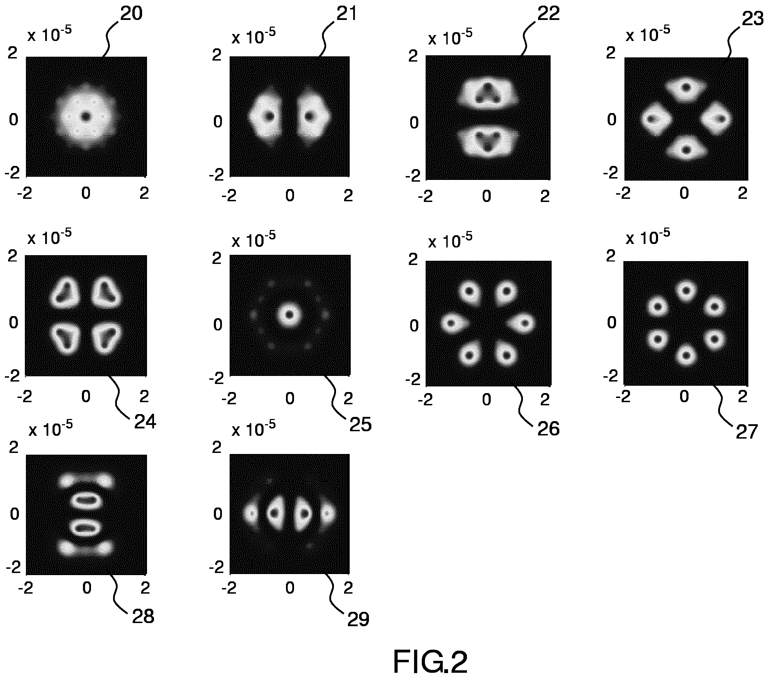

La FIG.2 représente l'intensité du champ électromagnétique calculée à la longueur d'onde de 1550 nm pour les 10 premiers modes spatiaux guidés dans une fibre amplificatrice légèrement multimode. Plus précisément, les images 20 - 29 correspondent aux modes guidés dans le cœur de la fibre par ordre décroissant de la constante de propagation (ou par ordre décroissant d'indice effectif des modes). Les modes spatiaux sont déterminés à partir de la résolution des équations de Maxwell, par exemple au moyen du logiciel Comsol MultiPhysics®. Comme cela apparaît sur la FIG. 2, les 10 modes ne sont pas confinés dans les inclusions 5 (FIG. 1A) et sont peu perturbés par les inclusions. En effet, dans la bande spectrale d'utilisation, le matériau constituant le cœur est configuré pour être suffisamment homogène optiquement ; autrement dit, l'onde électromagnétique qui se propage dans la fibre amplificatrice 1 ne résout pas la structure fine des différents matériaux composants le cœur et les modes spatiaux ne sont pas confinés dans l'une ou l'autre des inclusions et peu perturbés par les inclusions.

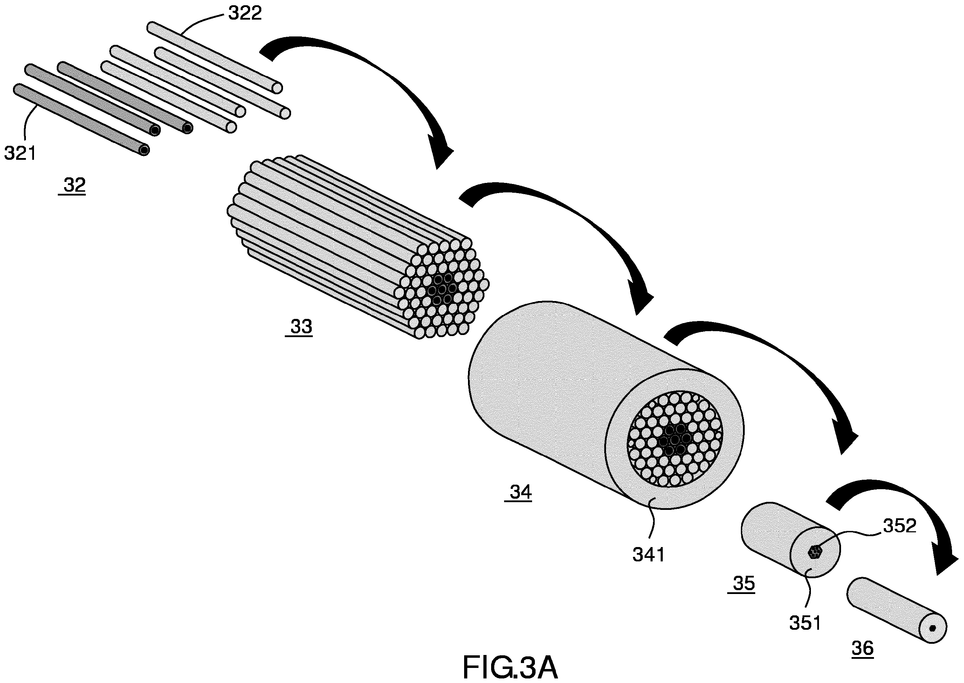

La FIG.3A illustre différentes étapes de fabrication d'un exemple de fibre amplificatrice légèrement multimode selon un exemple de méthode de fabrication selon la présente description, dite assemblage-étirage.

Dans une première étape 32 sont rassemblés des barreaux longitudinaux périphériques millimétriques 322 destinés à former la gaine de la fibre amplificatrice dont l'indice de réfraction est $n_0$ et des barreaux longitudinaux centraux millimétriques 321 destinés à former le cœur de la fibre amplificatrice. Les barreaux millimétriques sont généralement issus de l'étirage de cylindres centimétriques.

Les barreaux longitudinaux périphériques millimétriques 322 sont par exemple des barreaux de silice pure issus de cylindres disponibles dans le commerce.

Les barreaux longitudinaux centraux 321 comprennent une portion longitudinale centrale (en sombre sur la figure) comprenant le matériau d'indice $n_2$ et une portion longitudinale périphérique (en clair sur la figure) entourant la portion longitudinale centrale et comprenant le matériau d'indice $n_1$. Comme cela sera détaillé par la suite, la portion longitudinale centrale d'au moins un des barreaux longitudinaux centraux est dopée activement, par exemple avec des ions erbium $Er^{3+}$.

Les barreaux 321 et 322 sont assemblés sous forme d'une botte (étape 33), par exemple en les déposant simplement les uns sur les autres, de telle sorte que les barreaux longitudinaux périphériques 322 soient agencés par exemple de manière hexagonale autour des barreaux longitudinaux centraux 321 destinés à former le cœur de la fibre amplificatrice.

Dans une étape 34 la botte est insérée dans un tube manchon 341 puis l'assemblage peut être étiré une première fois (étape 35) de manière à fermer les trous interstitiels présents dans la structure. On obtient alors une canne présentant un diamètre de quelques millimètres, la partie externe 351 résultant de l'étirage de l'assemblage formé du manchon 341 et des barreaux longitudinaux périphériques 322 étant destinée à former la gaine et la partie interne 352 résultant de l'étirage de l'assemblage formé des barreaux longitudinaux centraux 321 étant destinée à former le cœur.

La canne ainsi obtenue peut être introduite dans un second tube manchon (non représenté sur la figure) et l'ensemble est étiré (étape 36) pour former la fibre optique, le diamètre étant alors de l'ordre de 80 $\mu$m à plus de 1 mm selon les applications.

Les inclusions peuvent être réparties symétriquement par rapport à l'axe central de la fibre amplificatrice lors de l'étape de réalisation de l'assemblage.

Différentes méthodes de fabrication connues de l'homme du métier peuvent être mises en œuvre pour la réalisation des barreaux longitudinaux centraux millimétriques 321.

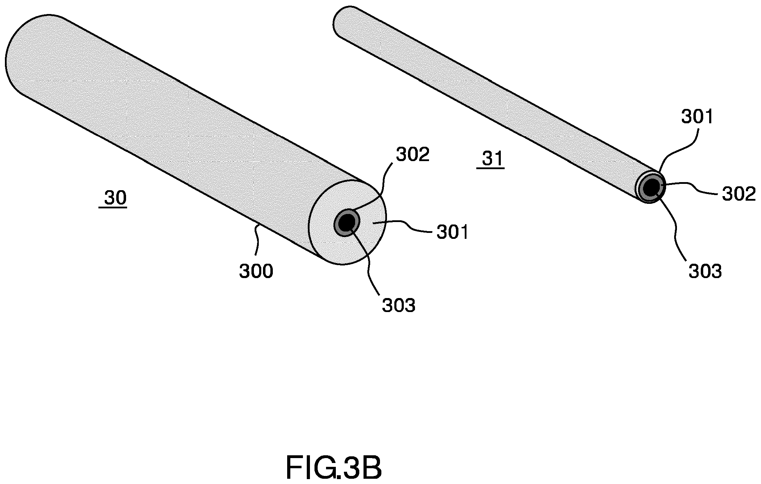

La FIG. 3B illustre de façon schématique des étapes d'une méthode de fabrication desdits barreaux longitudinaux centraux millimétriques 321.

Lors d'une étape 30, des préformes 300 sont fabriquées, par exemple par une méthode MCVD (abréviation de l'expression anglo-saxonne « Modified Chemical Vapor Deposition »). Les préformes ont un profil d'indice et un dopage souhaité.

Pour réaliser le profil d'indice souhaité, la méthode MCVD consiste à déposer successivement des couches de verre de composition contrôlée sur la surface intérieure d'un tube de silice substrat, la composition des couches conditionnant leur indice. Pour l'incorporation d'ions optiquement actifs comme les ions de terre-rare, la méthode de dopage en solution de couches de verres poreuses peut être mise en œuvre.

Les préformes 300 réalisées par MCVD comprennent, par exemple au sein d'une coque de silice 301, une portion longitudinale centrale 303 comprenant le matériau d'indice $n_2$, par exemple un barreau en verre, éventuellement dopé par des ions actifs, associés à des ions aluminium, germanium ou phosphore, et une portion longitudinale périphérique 302 entourant la portion longitudinale centrale et comprenant le matériau d'indice $n_1$, par exemple un verre d'indice de réfraction $n_1$ inférieur à $n_2$, mais supérieur à celui de la silice, obtenu par un niveau de dopage plus faible que pour la portion longitudinale centrale en, par exemple, aluminium, germanium ou phosphore.

Les préformes peuvent alors être usinées (étape 31), par exemple chimiquement ou mécaniquement (par abrasion) de manière à éliminer partiellement ou totalement la coque de silice 301.

Une fois usinées, les préformes peuvent être étirées en plusieurs barreaux millimétriques présentant un diamètre identique à celui des barreaux utilisés pour constituer la gaine et avec lesquels ils seront assemblés.

Selon d'autres exemples de réalisation, les barreaux longitudinaux centraux peuvent être réalisées par des méthodes telles que la méthode OVD (pour « Outside Vapor Deposition »), la méthode Repusil ou encore la méthode Sol-Gel. Ces méthodes ne nécessitent pas nécessairement d'attaque chimique ou mécanique partielle ou totale.

La méthode décrite ci-dessus, du fait qu'elle repose sur la réalisation d'un cœur micro-structuré obtenu par assemblage, permet de mieux contrôler la géométrie générale du cœur, en particulier l'agencement des zones dopées, en diminuant fortement la sensibilité aux propriétés optiques des sous-éléments constituant la micro-structuration tout en permettant de bénéficier des propriétés individuelles de ces sous-éléments pour optimiser l'amplification.

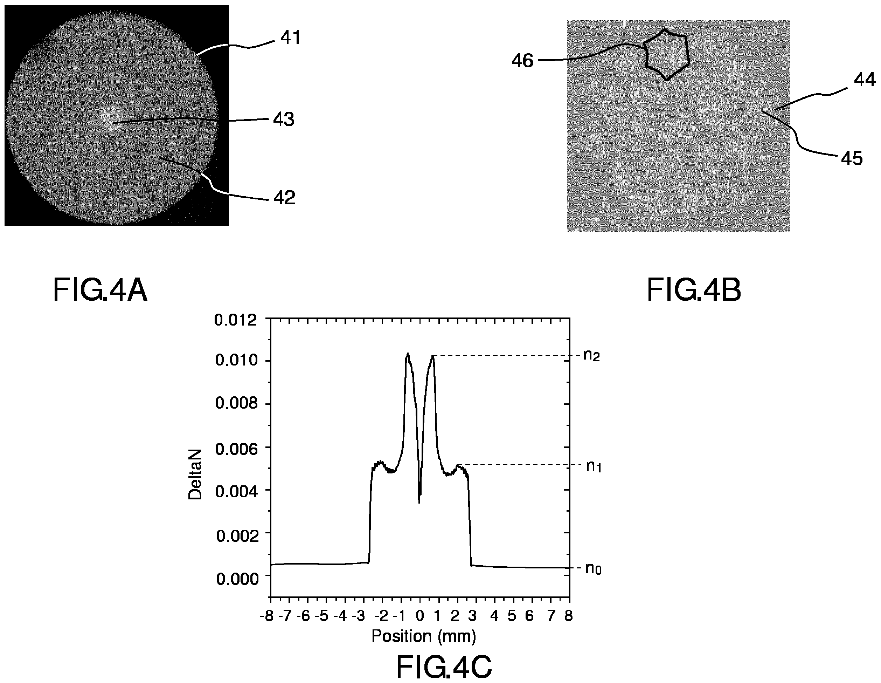

Les FIG.4A, FIG.4B représentent respectivement des images obtenues par microscopie optique et électronique d'un exemple de fibre amplificatrice légèrement multimode 41 selon la présente description, obtenue selon la méthode de fabrication précédemment décrite. La FIG. 4C illustre un profil d'indice d'une préforme MCVD utilisée pour fabriquer la fibre représentée sur les FIGS. 4A, 4B.

Pour la fabrication de la fibre optique légèrement multimode, les matériaux suivants ont été utilisés : Germanium pour le piédestal et un mélange Germanium-Aluminium-Erbium pour les inclusions.

Ainsi, les paramètres de la fibre amplificatrice légèrement multimode réalisée sont :

$$n_1 - n_0 = 4.4*10^{-3} \pm 0.1*10^{-3}$$

$$n_2 - n_1 = 4*10^{-3} \pm 0.1*10^{-3}$$

$$d_1 = 6\mu m \pm 0.1\mu m$$

$$d_2 = 2.6\mu m \pm 0.1\mu m$$

Dans cet exemple, toutes les inclusions sont dopées avec des ions erbium ($Er^{3+}$) et aluminium ($Al^{3+}$), toutes les inclusions étant identiques.

Sur la FIG. 4A, on observe ainsi le cœur 43 et la gaine 42 de la fibre 41.

Sur la FIG. 4B, on peut voir les inclusions 45 au sein du premier matériau 44. Sur cette image, on observe la présence de silice 46 autour des barreaux centraux, la coque de silice autour de la préforme n'ayant pas été complètement abrasée.

La FIG.4C représente la mesure expérimentale du profil de l'indice de réfraction d'une préforme adaptée pour former un barreau longitudinal central millimétrique (321, FIG. 3A). On observe sur cette figure la structure « en piédestal » avec l'indice de réfraction $n_2$ de la portion longitudinale centrale comprenant un matériau d'indice de réfraction plus élevé pour former une inclusion et l'indice de réfraction $n_1$ de la portion longitudinale périphérique entourant la portion longitudinale centrale et comprenant un matériau d'indice de réfraction plus faible. Dans cet exemple, la portion longitudinale est dopée Erbium. A noter que, dans le cas présent, le dopage en ions dopants ne modifie pas substantiellement l'indice de réfraction. Dans cet exemple, la variation d'indice brutale visible au centre de la portion longitudinale centrale résulte d'un artefact de fabrication pouvant être résorbé par une adaptation du procédé de fabrication de la préforme. Les déposants ont montré qu'une telle variation d'indice ne modifie pas ou quasiment pas la propagation de la lumière dans la fibre. La fibre amplificatrice légèrement multimode est donc également plus robuste aux artefacts de fabrication que les fibres amplificatrices de l'art antérieur. Ceci tient au fait que i) les éléments constituant le cœur peuvent être issus de techniques de fabrication classiquement utilisées pour la réalisation de fibres conventionnelles et ii) l'approche proposée ici est moins sensible à la maîtrise absolue du profil d'indice et à son homogénéité, la lumière ne résolvant pas les structures individuelles constituant les inclusions.

Dans cet exemple, la fibre est configurée pour la propagation de 10 modes dans la bande spectrale d'utilisation, i.e. la bande C.

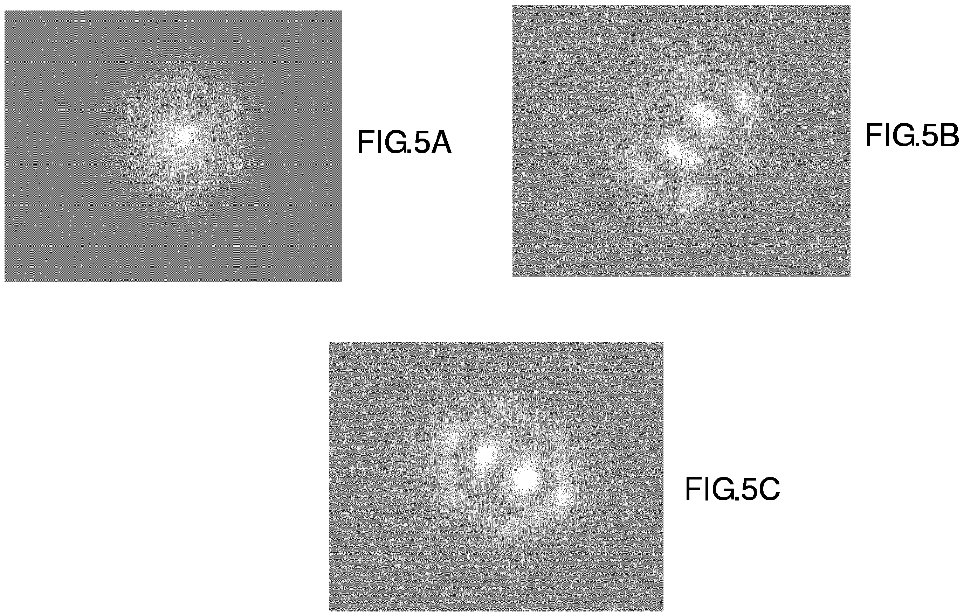

A titre d'illustration, les FIGS. 5A à 5C montrent des répartitions d'intensités observées en sortie d'un exemple de la fibre amplificatrice légèrement multimode et enregistrées à l'aide d'une caméra InGaAs.

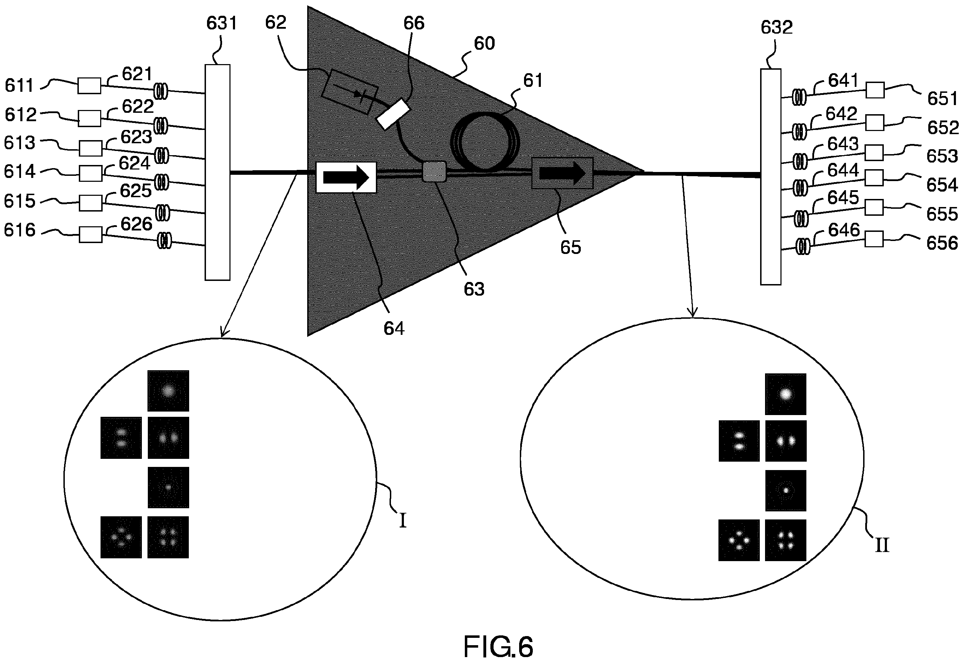

La FIG.6 représente un exemple d'un module d'amplification 60 de signaux optiques selon la présente description, équipé d'une fibre amplificatrice légèrement multimode 70 selon la présente description. La fibre amplificatrice légèrement multimode 70 est configurée pour la propagation d'un nombre donné de modes spatiaux.

Le module d'amplification 60 est représenté dans cet exemple dans une application de télécommunications optiques appliquée à l'amplification de signaux issus de fibres monomodes.

Ainsi, un ensemble de signaux optiques sont émis par des sources optiques référencées 611 - 616 sur la FIG. 6 à des longueurs d'onde comprises dans la bande spectrale d'utilisation de la fibre amplificatrice 61 et transportés par des fibres monomodes référencées 621 - 626. Un premier composant 631 de mise en forme spatiale des signaux optiques incidents et de multiplexage permet de transformer la répartition d'intensité de chacun des signaux optiques incidents de telle sorte à ce qu'un signal optique incident corresponde à un mode spatial de la fibre 61 puis à envoyer l'ensemble des signaux dans la fibre au cœur du module d'amplification 60. En sortie du module d'amplification 60, on observe à nouveau dans la bulle référencée II les 6 modes spatiaux correspondant aux 6 signaux optiques, mais amplifiés. Les signaux sont dé-multiplexés et leur répartition d'intensité transformée au moyen d'un composant 632 de démultiplexage et de mise en forme spatiale des signaux optiques incidents ; ils sont ensuite envoyés dans autant de fibres optiques monomodes 641 - 646 détectés à l'autre bout du système de télécommunication optique par un ensemble de détecteurs 651 - 656.

Comme illustré sur la FIG. 6, le module d'amplification 60 comprend en plus de la fibre optique légèrement multimode 61, une source de pompage optique 62 et un composant de multiplexage 63 configuré pour injecter les signaux optiques et le faisceau de pompe dans la fibre amplificatrice 61.

Une fois injectés les signaux optiques et le faisceau pompe se propagent dans le cœur de la fibre amplificatrice selon l'invention. La source de pompage optique est par exemple une diode laser monomode émettant autour de 980 nm et adaptée pour l'émission d'un faisceau de pompe permettant d' « activer » la fibre amplificatrice 61. Plus précisément, le faisceau de pompe dans la fibre amplificatrice permet d'exciter les ions des zones dopées de l'état fondamental vers un état excité. Les photons des signaux optiques incidents entraînent une relaxation des ions excités vers l'état fondamental par un mécanisme d'émission stimulée qui s'accompagne de l'émission de photons de mêmes caractéristiques que ceux des signaux optiques, entraînant une amplification des signaux incidents.

Dans l'exemple de la FIG. 6, le module d'amplification comprend en outre un dispositif de mise en forme spatiale du faisceau de pompe 66, configuré pour contrôler le gain entre les différents modes spatiaux, c'est-à-dire le gain modal différentiel ou « DMG » selon l'expression anglo-saxonne « Differential Modal Gain ». La configuration de l'intensité du faisceau de pompe est réalisée en fonction du profil de dopage dans la fibre amplificatrice 61 et sera décrite plus en détails par la suite.

Le composant de multiplexage en longueur d'onde 63 permet d'injecter dans la fibre amplificatrice les signaux optiques incidents et le faisceau de pompe. Le composant de multiplexage est par exemple un miroir dichroïque ou tout élément optique réfléchissant permettant la réflexion d'un faisceau à une longueur d'onde (celle de pompe par exemple) et la transmission d'un faisceau à une longueur d'onde différente (celle des signaux par exemple). Tout autre dispositif, fibré ou en optique libre, permettant d'effectuer une opération similaire peut être envisagé.

Tout le long de la fibre amplificatrice légèrement multimode, les réflexions ainsi que la diffusion Rayleigh peuvent induire également du bruit. Afin d'éviter ce phénomène, deux isolateurs optiques 64, 65 peuvent être placés dans le module d'amplification, de part et d'autre de la fibre optique légèrement multimode 61 pour limiter l'impact de ces réflexions parasites.

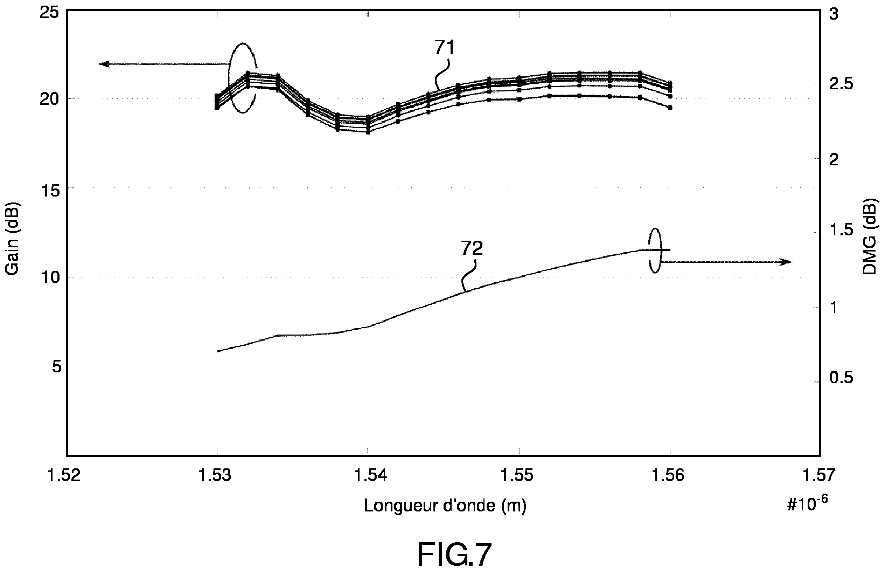

La FIG.7 représente des gains calculés (courbes 71) pour différents modes spatiaux de la fibre optique légèrement multimode et pour différentes longueurs d'onde ainsi que l'écart de gain entre les différents modes spatiaux (DMG) (courbe 72).

Ces résultats sont obtenus avec une puissance de pompe de 800 mW répartie sur les 4 modes spatiaux pour respectivement 23%, 36%, 28% et 14 % de la puissance totale, une puissance signal totale de 3,2 W (20 $\mu$W par mode et par longueur d'onde) et une longueur de fibre de 1.9 m pour une concentration en ions Er$^{3+}$ dans chaque inclusion de 1*10$^{26}$ ions.m$^{-3}$.

Dans cet exemple, le profil d'indice de la fibre amplificatrice, la répartition d'ions dopants et le faisceau de pompe ont été configurés pour minimiser l'écart entre les gains des différents modes sur une bande spectrale d'utilisation comprise entre 1,53 $\mu$m et 1,56 $\mu$m et correspondant à la bande C des télécommunications optiques. La DMG montre un écart compris entre 0,8 et 1.3 dB, ce qui illustre l'égalisation du gain en fonction des différents modes sur la plage de longueurs d'onde considérée.

En fonction des applications recherchées, l'homme du métier pourra concevoir une fibre amplificatrice légèrement multimode (profil d'indice de réfraction et profil transverse de dopant) et configurer le faisceau de pompe pour obtenir les gains souhaités pour le ou les modes spatiaux adaptés à se propager dans la fibre et selon lesquels vont se propager les faisceaux incidents.

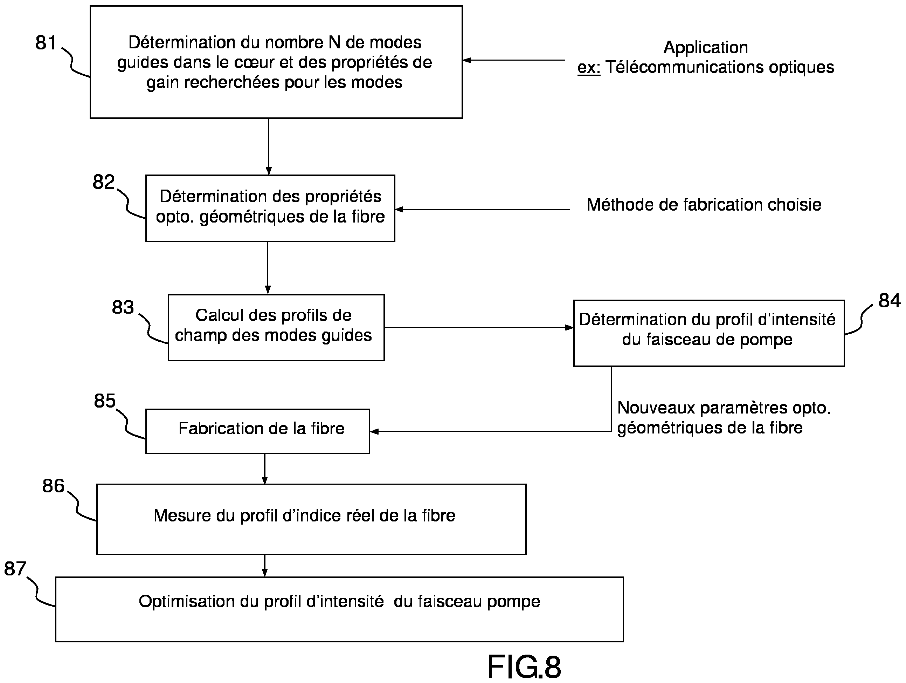

La FIG. 8 illustre ainsi différentes étapes pour la conception d'une fibre amplificatrice légèrement multimode selon la présente description et la configuration du faisceau de pompe.

Une première étape 81 comprend la détermination d'un nombre donné N de modes spatiaux devant être guidés par la fibre amplificatrice légèrement multimode à une longueur d'onde d'intérêt et parmi ces modes, ceux que l'on veut amplifier.

La détermination des modes spatiaux et de leur amplification dépend de l'application. Ainsi, par exemple, dans le cas d'applications pour les télécommunications optiques, un objectif est d'amplifier simultanément différents signaux incidents se propageant dans une bande spectrale d'utilisation donnée, avec une différence de gain entre ces modes la plus faible possible. On cherchera alors à former au moins autant de modes guidés dans la fibre amplificatrice légèrement multimode et d'égaliser les gains entre ces modes. Pour des applications à la génération de lasers fibrés (utilisés pour des applications dans le domaine médical ou, dans le monde industriel pour des activités de mise en forme de la matière), un objectif est de maîtriser l'amplification des différents modes guidés de manière à favoriser un mode au détriment des autres.

Dans une deuxième étape 82, les propriétés opto-géométriques du cœur et des inclusions sont calculées pour obtenir les N modes dans cette bande spectrale d'utilisation. Les propriétés opto-géométriques dépendent aussi de la technologie choisie pour la réalisation de la fibre amplificatrice. Dans cette étape, on détermine notamment le nombre d'inclusions, ainsi que le profil d'indice du cœur « en piédestal », de manière à permettre notamment (i) le guidage du nombre souhaité de modes à une longueur d'onde représentative de la fenêtre spectrale d'utilisation et (ii) le confinement de la lumière dans le cœur et non dans les inclusions individuelles.

A partir de ces paramètres, on calcule (étape 83) les profils de champs des modes guidés à la longueur d'onde des signaux optiques et à celle de la pompe.

Vient ensuite une étape 84 de détermination du profil d'intensité du faisceau de pompe et de la répartition en ions dopants la plus favorable aux propriétés amplificatrices souhaitées.

L'utilisation d'un code de calcul, par exemple celui de la référence Le Cocq et al, Optics Express 20(24) 27051 (2012) basé sur un modèle de résolution d'équations différentielles couplées décrivant l'évolution spatiale des faisceaux, permet de calculer le gain des différents modes guidés (déterminés précédemment) en fonction des conditions d'utilisation de la fibre (concentration en ions actifs, longueur de fibre, longueur d'onde de pompage, puissances optiques pour les faisceaux de pompe et de signal...) est utilisé pour définir le profil d'intensité de pompe qui permettra d'optimiser les propriétés amplificatrices (par exemple, minimiser le différentiel de gain entre modes). En pratique, cette optimisation se fait selon deux axes : la composition modale à la longueur d'onde de pompe et la distribution transverse de dopant. Pour cela, l'homme du métier aura recours à des méthodes numériques d'optimisation (comme la méthode du gradient) qui seront couplées au modèle d'amplification.

Une fibre amplificatrice est fabriquée (étape 85) de manière à respecter la géométrie issue de l'optimisation théorique précédente.

Le profil d'indice de la fibre ainsi fabriquée, ainsi que la concentration en ions actifs, sont mesurés et introduits dans le code de calcul de modes et le code d'amplification afin de confronter théorie et expérience et d'affiner le choix du profil d'intensité du faisceau de pompe (étape 87).

La fibre amplificatrice légèrement multimode a été décrite dans la présente description avec un cœur unique. Il est possible par ailleurs de concevoir une fibre amplificatrice multicœurs dans laquelle chaque cœur serait réalisé selon la présente description.

Bien que décrite à travers un certain nombre d'exemples de réalisation détaillés, une fibre amplificatrice légèrement multimode, la méthode pour fabriquer d'une telle fibre amplificatrice légèrement multimode et un module d'amplification comprenant une telle fibre amplificatrice légèrement multimode selon la présente description comprennent différentes variantes, modifications et perfectionnements qui apparaîtront de façon évidente à l'homme de l'art, étant entendu que ces différentes variantes, modifications et perfectionnements font partie de la portée de l'objet de la présente description, telle que définie par les revendications qui suivent.

**Revendications**

**1.** Fibre amplificatrice légèrement multimode (11) dans une bande spectrale d'utilisation donnée, comprenant :

- une gaine (12) présentant un indice de réfraction ($n_0$) donné ;
- au moins un cœur (13) d'indice de réfraction et de dimensions adaptées pour la propagation d'un nombre fini de modes spatiaux dans la bande spectrale d'utilisation de la fibre, un mode spatial de propagation correspondant à un canal de transport de l'information; et

dans laquelle le cœur (13) comprend:

- un premier matériau solide (14) présentant un premier indice de réfraction ($n_1$) donné strictement supérieur à l'indice de réfraction de la gaine ($n_0$), et
- au sein dudit premier matériau (14), des inclusions (15) séparées spatialement les unes des autres, formées de barreaux longitudinaux comprenant chacun au moins un deuxième matériau solide présentant un deuxième

indice de réfraction ($n_2$) strictement supérieur au premier indice de réfraction ($n_1$), au moins une desdites inclusions étant dopée activement,

tel que la propagation du nombre fini de modes spatiaux dans le coeur ne résout pas la structure fine des différents matériaux composant le coeur et les modes spatiaux ne sont pas confinés dans l'une ou l'autre des inclusions et peu perturbés par les inclusions.

2. Fibre amplificatrice selon la revendication 1, dans laquelle un paramètre de fréquence normalisé de chaque inclusion défini par $V_2 = \dfrac{\pi d_2}{\lambda}\sqrt{n_2^2 - n_1^2}$ , où $n_1$ est ledit premier indice de réfraction, $n_2$ est ledit deuxième indice de réfraction, $d_2$ est une dimension maximale de ladite inclusion, est strictement inférieur à 1, préférentiellement strictement inférieur à 0.8.

3. Fibre amplificatrice selon l'une quelconque des revendications précédentes, dans laquelle la différence entre le deuxième indice de réfraction ($n_2$) et le premier indice de réfraction ($n_1$) est supérieure ou égale à $10^{-3}$.

4. Fibre amplificatrice selon l'une quelconque des revendications précédentes, dans laquelle une dimension maximale ($d_2$) de chaque inclusion est inférieure ou égale à dix fois la longueur d'onde minimale de ladite bande spectrale d'utilisation.

5. Fibre amplificatrice selon l'une quelconque des revendications précédentes, dans laquelle les inclusions sont réparties symétriquement par rapport à un axe central de la fibre amplificatrice.

6. Fibre amplificatrice selon l'une quelconque des revendications précédentes, dans laquelle au moins une des dites inclusions est dopée avec des ions de terre-rare, par exemple Erbium, Ytterbium, Thulium.

7. Méthode de fabrication d'une fibre amplificatrice légèrement multimode selon l'une des revendications précédentes, comprenant :

- l'assemblage de barreaux longitudinaux périphériques millimétriques (322) destinés à former au moins une partie de la gaine autour de barreaux longitudinaux centraux millimétriques (321) destinés à former le cœur de la fibre amplificatrice, lesdits barreaux longitudinaux centraux (321) comprenant :

- une portion longitudinale centrale comprenant ledit deuxième matériau et
- une portion longitudinale périphérique entourant ladite portion longitudinale centrale et comprenant ledit premier matériau, la portion longitudinale centrale d'au moins un des barreaux longitudinaux centraux étant dopée activement ;

- l'étirage de l'assemblage ainsi formé desdits barreaux longitudinaux centraux millimétriques et desdits barreaux longitudinaux périphériques millimétriques pour former la fibre amplificatrice.

8. Méthode de fabrication d'une fibre amplificatrice selon la revendication 7 comprenant une étape préalable de fabrication desdits barreaux longitudinaux centraux millimétriques, ladite étape préalable comprenant :

- la réalisation de préformes (301), les préformes comprenant une coque de silice, lesdits premier et deuxième matériaux ;
- l'usinage des préformes pour éliminer partiellement ou totalement la coque de silice ;
- l'étirage des préformes après usinage pour obtenir lesdits barreaux longitudinaux centraux millimétriques.

9. Module d'amplification (60) de signaux optiques de longueurs d'onde comprises dans une bande spectrale d'utilisation donnée comprenant :

- une fibre amplificatrice légèrement multimode (61) selon l'une quelconque des revendications 1 à 6, configurée pour le guidage d'un nombre donné de modes spatiaux dans ladite bande spectrale d'utilisation ;
- une source de pompage optique (62) configurée pour l'émission d'un faisceau de pompe permettant d'activer la fibre amplificatrice ;
- un composant de multiplexage en longueur d'onde (63) configuré pour injecter lesdits faisceaux signaux et ledit faisceau de pompe dans la fibre amplificatrice.

10. Module d'amplification selon la revendication 9, comprenant un module de mise en forme spatiale du faisceau de pompe configuré pour contrôler sélectivement l'activation de la fibre amplificatrice en fonction desdits modes spatiaux.

11. Module d'amplification selon l'une quelconque des revendications 9 ou 10, dans lequel le dopage d'au moins une desdites inclusions de la fibre amplificatrice et la forme spatiale du faisceau de pompe sont configurés pour que les gains des modes spatiaux soient égaux.

12. Module d'amplification selon l'une quelconque des revendications 9 ou 10, dans lequel le dopage d'au moins une desdites inclusions de la fibre amplificatrice et la forme spatiale du faisceau de pompe sont configurés pour que le gain d'un mode spatial de la fibre amplificatrice soit différent de zéro et que les gains des autres modes spatiaux soit nul.

**Patentansprüche**

1. Mäßig multimodal verstärkende Faser (11) in einem gegebenen Einsatzspektralband, umfassend:

   - eine Umhüllung (12), die einen gegebenen Brechungskoeffizienten ($n_0$) aufweist;
   - mindestens einen Kern (13) mit einem Brechungskoeffizienten und mit Abmessungen, die für die Ausbreitung einer endlichen Zahl von räumlichen Moden in dem Einsatzspektralband der Faser geeignet sind, wobei ein räumlicher Ausbreitungsmodus einem Informationstransportkanal entspricht; und

   wobei der Kern (13) umfasst:

   - ein erstes massives Material (14), das einen ersten gegebenen Brechungskoeffizienten ($n_1$) aufweist, der strikt größer als der Brechungskoeffizient der Umhüllung ($n_0$) ist, und
   - innerhalb des ersten Materials (14) Einschlüsse (15), die räumlich voneinander getrennt und aus Längsstäben gebildet sind, die jeweils mindestens ein zweites massives Material umfassen, das einen zweiten Brechungskoeffizienten ($n_2$) aufweist, der strikt größer als der erste Brechungskoeffizient ($n_1$) ist, wobei mindestens einer der Einschlüsse aktiv dotiert ist, so dass die Ausbreitung der endlichen Zahl von räumlichen Moden in dem Kern nicht die Feinstruktur der verschiedenen Materialien, die den Kern bilden, auflöst und die räumlichen Moden nicht in dem einen oder anderen Einschluss eingegrenzt sind und durch die Einschlüsse wenig gestört sind.

2. Verstärkungsfaser nach Anspruch 1, wobei ein normalisierter Frequenzparameter jedes Einschlusses, der durch $V_2 = \frac{\pi d_2}{\lambda} \sqrt{n_2^2 - n_1^2}$ definiert ist, wobei $n_1$ der erste Brechungskoeffizient ist, $n_2$ der zweite Brechungskoeffizient ist, $d_2$ eine maximale Abmessung des Einschlusses ist, strikt unter 1, vorzugsweise strikt unter 0,8 liegt.

3. Verstärkungsfaser nach einem der vorhergehenden Ansprüche, wobei die Differenz zwischen dem zweiten Brechungskoeffizienten ($n_2$) und dem ersten Brechungskoeffizienten ($n_1$) größer oder gleich $10^{-3}$ ist.

4. Verstärkungsfaser nach einem der vorhergehenden Ansprüche, wobei eine maximale Abmessung ($d_2$) jedes Einschlusses kleiner oder gleich dem Zehnfachen der minimalen Wellenlänge des Einsatzspektralbands ist.

5. Verstärkungsfaser nach einem der vorhergehenden Ansprüche, wobei die Einschlüsse symmetrisch in Bezug auf eine Mittelachse der Verstärkungsfaser verteilt sind.

6. Verstärkungsfaser nach einem der vorhergehenden Ansprüche, wobei mindestens einer der Einschlüsse mit seltene Erdenionen, zum Beispiel Erbium, Ytterbium, Thulium, dotiert ist.

7. Herstellungsverfahren für eine mäßig multimodal verstärkende Faser nach einem der vorhergehenden Ansprüche, umfassend:

- Zusammensetzen von millimetrischen umfänglichen Längsstäben (322), die dazu geeignet sind, mindestens einen Teil der Umhüllung um millimetrische mittlere Längsstäbe (321) zu bilden, die dazu geeignet sind, den Kern der Verstärkungsfaser zu bilden, wobei die mittleren Längsstäbe (321) umfassen:
- einen mittleren Längsabschnitt, der das zweite Material umfasst, und
- einen umfänglichen Längsabschnitt, der den mittleren Längsabschnitt umgibt und das erste Material umfasst, wobei der mittlere Längsabschnitt mindestens eines der mittleren Längsstäbe aktiv dotiert ist;
- Strecken der so aus den millimetrischen mittleren Längsstäben und den millimetrischen umfänglichen Längsstäben gebildeten Anordnung, um die Verstärkungsfaser zu bilden.

8. Herstellungsverfahren für eine Verstärkungsfaser nach Anspruch 7, umfassend einen vorherigen Schritt der Herstellung der millimetrischen mittleren Längsstäbe, wobei der vorherige Schritt umfasst:

- Konstruktion von Vorformen (301), wobei die Vorformen eine Schale aus Silizium, dem ersten und dem zweiten Material umfassen,
- Fertigung der Vorformen, um die Siliziumschale teilweise oder ganz zu entfernen;
- Strecken der Vorformen nach der Fertigung, um die millimetrischen mittleren Längsstäbe zu erhalten.

9. Verstärkungsmodul (60) für optische Signale mit Wellenlängen innerhalb eines gegebenen Einsatzspektralbands, umfassend

- eine mäßig multimodal verstärkende Faser (61) nach einem der Ansprüche 1 bis 6, die für das Leiten einer gegebenen Zahl von räumlichen Moden in dem Einsatzspektralband konfiguriert ist;
- eine optische Pumpquelle (62), die zum Aussenden eines Pumpstrahls konfiguriert ist, durch den die Verstärkungsfaser aktiviert werden kann;
- eine Wellenlängenmultiplexkomponente (63), die dafür konfiguriert ist, die Signalstrahlen und den Pumpstrahl in die Verstärkungsfaser einzuspeisen.

10. Verstärkungsmodul nach Anspruch 9, umfassend ein Modul zum räumlichen Formen des Pumpstrahls, das dafür konfiguriert ist, die Aktivierung der Verstärkungsfaser in Abhängigkeit von den räumlichen Moden selektiv zu steuern.

11. Verstärkungsmodul nach einem der Ansprüche 9 oder 10, wobei das Dotieren mindestens eines der Einschlüsse der Verstärkungsfaser und die räumliche Form des Pumpstrahls so konfiguriert sind, dass die Verstärkungen der räumlichen Moden gleich sind.

12. Verstärkungsmodul nach einem der Ansprüche 9 oder 10, wobei das Dotieren mindestens eines der Einschlüsse der Verstärkungsfaser und die räumliche Form des Pumpstrahls so konfiguriert sind, dass die Verstärkung einer räumlichen Mode der Verstärkungsfaser nicht Null ist und die Verstärkungen der anderen räumlichen Moden Null sind.

**Claims**

1. A slightly multimode amplifying fibre (11) in a given spectral band of use, comprising:

- a cladding (12) having a given refractive index ($n_0$);
- at least one core (13) of refractive index and of dimensions suited to the propagation of a finite number of spatial modes in the spectral band of use of the fibre, a spatial propagation mode corresponding to a channel for transporting information; and

wherein the core (13) comprises:

- a first solid material (14) having a given first refractive index ($n_1$) strictly greater than the refractive index of the cladding ($n_0$), and
- within said first material (14), inclusions (15) spatially separated from one another, formed by longitudinal bars each comprising at least one second solid material having a second refractive index ($n_2$) strictly greater than the first refractive index ($n_1$), at least one of said inclusions being actively doped, such that the propagation of the finite number of spatial modes in the core does not resolve the fine structure of the different materials composing the core and the spatial modes are not confined in any of the inclusions and little disturbed by the inclusions.

2. The amplifying fibre according to claim 1, wherein a standardised frequency parameter of each inclusion defined by $V_2 = \frac{\pi d_2}{\lambda} \sqrt{n_2^2 - n_1^2}$ , in which $n_1$ is said first refractive index, $n_2$ is said second refractive index, $d_2$ is a maximum dimension of said inclusion, is strictly less than 1, preferentially strictly less than 0.8.

3. The amplifying fibre according to either one of the preceding claims, wherein the difference between the second refractive index ($n_2$) and the first refractive index ($n_1$) is greater than or equal to $10^{-3}$.

4. The amplifying fibre according to any one of the preceding claims, wherein a maximum dimension ($d_2$) of each inclusion is less than or equal to ten times the minimum wavelength of said spectral band of use.

5. The amplifying fibre according to any one of the preceding claims, wherein the inclusions are distributed symmetrically with respect to a central axis of the amplifying fibre.

6. The amplifying fibre according to any one of the preceding claims, wherein at least one of said inclusions is doped with rare earth ions, for example erbium, ytterbium, thulium.

7. A method for manufacturing a slightly multimode amplifying fibre according to any one of the preceding claims, comprising:

- assembling the millimetric peripheral longitudinal bars (322) intended to form at least a part of the cladding around millimetric central longitudinal bars (321) intended to form the core of the amplifying fibre, said central longitudinal bars (321) comprising:
- a central longitudinal portion comprising said second material and
- a peripheral longitudinal portion surrounding said central longitudinal portion and comprising said first material, the central longitudinal portion of at least one of the central longitudinal bars being actively doped;
- stretching the thus formed assembly of said millimetric central longitudinal bars and of said millimetric peripheral longitudinal bars to form the amplifying fibre.

8. The method for manufacturing an amplifying fibre according to claim 7, comprising a preliminary step of manufacturing of said millimetric central longitudinal bars, said preliminary step comprising:

- producing preforms (301), the preforms comprising a silica shell, said first and second materials;
- machining the preforms to partially or totally eliminate the silica shell;
- stretching the preforms after machining to obtain said millimetric central longitudinal bars.

9. Amplification module (60) for optical signals of wavelengths lying within a given spectral band of use, comprising:

- a slightly multimode amplifying fibre (61) according to any one of claims 1 to 6, configured to guide a given number of spatial modes in said spectral band of use;
- an optical pumping source (62) configured to emit a pump beam that makes it possible to activate the amplifying fibre;
- a wavelength multiplexing component (63) configured to inject said signal beams and said pump beam into the amplifying fibre.

10. The amplification module according to claim 9, comprising a pump beam spatial forming module configured to selectively control the activation of the amplifying fibre as a function of said spatial modes.

11. The amplification module according to one of claim 9 or 10, wherein the doping of at least one of said inclusions of the amplifying fibre and the spatial form of the pump beam are configured for the gains of the spatial modes to be equal.

12. The amplification module according to one of claim 9 or 10, wherein the doping of at least one of said inclusions of the amplifying fibre and the spatial form of the pump beam are configured for the gain of a spatial mode of the amplifying fibre to be different from zero and for the gains of the other spatial modes to be nil.

FIG.1A

FIG.1B

FIG.2

FIG.3A

FIG.3B

EP 3 649 707 B1

FIG.4A

FIG.4B

FIG.4C

EP 3 649 707 B1

FIG.5A

FIG.5B

FIG.5C

FIG.6

DMG (dB)

Gain (dB)

Longueur d'onde (m)

71

72

FIG.7

81 — Détermination du nombre N de modes guides dans le cœur et des propriétés de gain recherchées pour les modes ← Application ex: Télécommunications optiques

82 — Détermination des propriétés opto. géométriques de la fibre ← Méthode de fabrication choisie

83 — Calcul des profils de champ des modes guides → Détermination du profil d'intensité du faisceau de pompe — 84

85 — Fabrication de la fibre ← Nouveaux paramètres opto. géométriques de la fibre

86 — Mesure du profil d'indice réel de la fibre

87 — Optimisation du profil d'intensité du faisceau pompe

FIG.8

## RÉFÉRENCES CITÉES DANS LA DESCRIPTION

**Documents brevets cités dans la description**

- US 2014168756 A1

**Littérature non-brevet citée dans la description**

- **J-B. TRINEL ; G. LE COCQ ; E. ANDRESEN ; Y. QUIQUEMPOIS ; L. BIGOT.** Latest results and future perspectives on Few-Mode Erbium Doped Fiber Amplifiers. *Optical Fiber Technology,* 2017, vol. 35, 56-63

- **LE COCQ et al.** *Optics Express,* 2012, vol. 20 (24), 27051